# EUROPEAN PATENT APPLICATION

(11) **EP 1 260 513 A1**
(43) Date of publication of application: **27.11.2002**
(21) Application number: 01112456.7
(22) Date of filing: 22.05.2001
(51) Int. Cl.: C07F 7/08, C07F 7/18, C09D 5/16, C08F 4/42

(54) **Process for the preparation of trialkylsilylated carboxylate monomers, the obtained trialkylsilylated carboxylate monomers and their use in antifouling coatings**

(71) Applicant: SIGMA COATINGS B.V., 1422 AD Uithoorn (NL)
(72) Inventor: Gillard, Michel, 1348 Louvain-la-Neuve (BE); Plehiers, Mark, 1000 Bruxelles (BE)
(74) Representative: Walsh, David Patrick

(57) **Abstract**

The invention relates to a process for the preparation of trialkylsilylated carboxylate monomers of general formula **(I)** 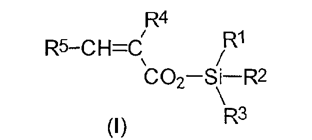 which process comprises the step of reacting a hexaalkyldisilylsulfate of the formula **(IV)** 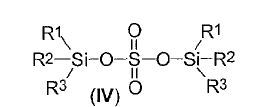 with an unsaturated carboxylic compound of formula **(III)** 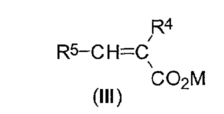 and the obtained compounds.

The invention further relates to a process for the preparation of a hexaalkyldisilylsulfate of the formula **(IV)** by treating a hexaalkyldisiloxane of formula **(II)** 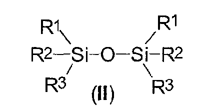 with fuming sulfuric acid, and the obtained compounds.

The invention further relates to the use of said compound **(I)** in the preparation of a hydrolysable polymer.

## Description

### Field of the invention

The invention relates to a new method for the chemical preparation of trialkylsilylated carboxylate monomers. The invention also relates to a process for the preparation of a hexaalkyldisilylsulfate suitable in the process for the preparation of said monomers. The invention further relates to said obtained trialkylsilylated carboxylate monomers and in another aspect, the invention further relates to their use for the synthesis of hydrolysable polymers, such as binders for modern antifouling coatings.

### Background

Antifouling paints are used to prevent and delay the fouling of underwater structures (e.g. ships' bottom, docks, fishnets, and buoys) by various marine organisms such as shells, seaweed, and aquatic bacteria. When such marine organisms adhere and propagate on an underwater structure like the bottom of a ship, the surface roughness of the whole ship may be increased to induce decrease of velocity of the ship or increase of fuel consumption. Further, removal of such aquatic organisms from the ship's bottom needs much labour and a long period of working time. In addition, if these organisms adhere and propagate on an underwater structure such as a steel structure and deteriorates their anticorrosive coating films, the strength or the function of the underwater structure may be lowered and thereby extremely reduce the lifetime of the underwater structure.

Underwater structures are therefore coated with antifouling paint with excellent antifouling properties. Recent anti-fouling paints employ polymers containing various hydrolysable groups and more specifically organosilyl groups. Amongst those antifouling paints is for example, an antifouling paint of the hydrolysable self-polishing type proposed in WO 8402915 and JP 63215780 which employs a methacrylic ester polymer having triorganosilyl group in side chains or a similar polymer. Other examples of patents and patent applications related to the use of organosilyl acrylate polymers in antifouling compositions are EP 131626, US 4593055, US 4594 365, JP 63118381, EP 0775733, WO 9638508, JP 11116257, EP 802243, EP 0714957, JP 07018216, JP 01132668, JP 05077712, JP 01146969 and US 4957989 and hereby incorporated by reference.

Some of the polymers used in the above-described antifouling paints are based on silylated carboxylate monomers.

Several processes are known as conventional techniques for the synthesis of said silylated carboxylate monomers.

JP 5306290 describes a process to obtain a methacrylic functional group-containing organosilicon compound. The process comprises reacting methacrylic acid with a halogenoalkylsilane (e.g. trialkylsilylchloride) in the presence of a tertiary amine compound having a cyclic structure. This process may have disadvantages such as the reduced availability and storage stability of the silyl chloride. Moreover, the reaction yields a hydrogen halide or a halide salt as a by-product, which provokes the corrosion of the production equipment.

The synthesis of trimethylsilyl methacrylate from methacrylic acid and hexamethyldisilazane is described in footnote 9 of S.Murata and R.Noyori, Tetrahedron Letters, vol.22, n°22, p 2107 (1981).

JP 10195084 discloses the reaction of unsaturated carboxylic acid such as acrylic acid or methacrylic acid with a trialkylsilylhydride compound in the presence of a copper catalyst. One of the disadvantages of this method is the risk of hydrogenation of the unsaturated carboxylic acid due to a side reaction of the produced H₂ on the carbon-carbon double bond.

A first object of the present invention is to provide a novel process capable of readily preparing trialkylsilylated carboxylate compounds in a high yield from starting materials that are inexpensive and easily available. A second object of the present invention is to provide a novel process offering an improvement vis-à-vis of the disadvantages disclosed above.

Another object of the present invention is to provide for a more direct method for the synthesis of such trialkylsilylated carboxylate compounds, with a more suitable reaction.

Yet another object of the invention is a process providing for easy work-up procedures.

A further object of the invention is a process providing a straightforward purification.

Yet a further object of the invention is a process adaptable for the synthesis of unsaturated, thus being polymerisable, silyl esters involving one or more steps carried out at room temperature. Still a further object is a process avoiding the need to use an inhibitor during the monomer synthesis.Still another object is a process avoiding a further purification step.

### Summary of the invention

The present invention relates to a new process for the preparation of trialkylsilylated carboxylate monomers of general formula **(I)** 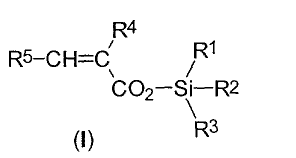 wherein R¹, R², R³ represents each independently an alkyl or an aryl group, R⁴ represents a hydrogen atom or a methyl group and R⁵ represents a hydrogen, alkyl, -COR⁶ or - COOR⁶; wherein R⁶ represents an alkyl group, which process comprises the step of reacting a hexaalkyldisilylsulfate of the formula **(IV)** 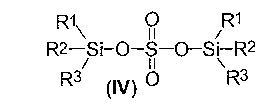 with an unsaturated carboxylic compound of formula **(III)** 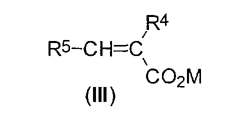 wherein M is a metallic cation and R¹, R², R³, R⁴, R⁵ have the same meaning as that defined above respectively.

The present invention further relates to a process for the preparation of a hexaalkyldisilylsulfate of the formula **(IV)** 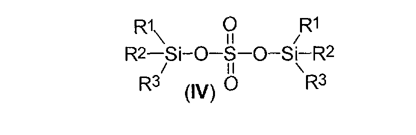 by treating a hexaalkyldisiloxane of formula **(II)** 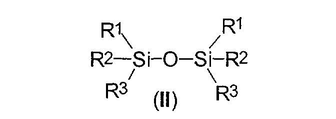 with fuming sulfuric acid, wherein R¹, R², R³ represents each independently an alkyl or an aryl group.

In a preferred embodiment said latter process can precede the first process.

In a preferred embodiment R¹, R², R³ and R⁶ each independently represents a linear, branched or cyclic alkyl group, saturated or unsaturated, containing from 1 to 12 carbon atoms, preferably from 1 to 6 carbon atoms, more preferably from 1 to 4 carbon atoms, yet more preferably 4 carbon atoms.

M is preferably chosen from the group comprising Li⁺, Na⁺, K⁺, Ba⁺⁺, Ca⁺⁺ and more preferably Na⁺ and K⁺.

More suitably, R¹, R², R³ each independently are chosen from the group comprising of methyl, ethyl, propyl, isopropyl, butyl, t-butyl, phenyl or substituted phenyl. Yet in a more preferred embodiment R¹, R², R³ are butyl or isopropyl.

In another embodiment the trialkylsilylated carboxylates of general formula **(I)** and the unsaturated carboxylic compound **(III)** can be either of cis (maleic) or trans (fumaric) configuration.

In a more preferred embodiment the trialkylsilylated carboxylates obtained by the process of the invention are preferably trialkylsilyl methacrylates.

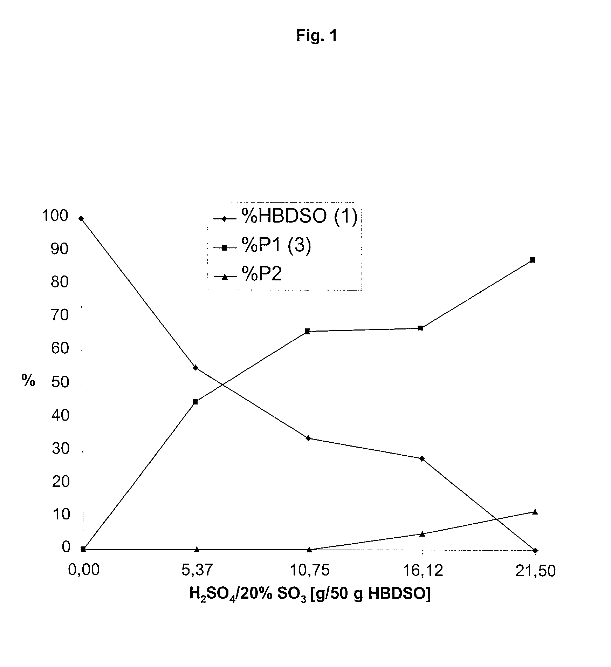

The present invention will be further disclosed in detail hereunder. Four examples and figure 1, which is a graph showing the yield versus the weight of 20% fuming sulphuric acid, will elucidate the present invention further in a non-limiting way.

### Detailed description of the invention

The present invention relates to a new process for the synthesis of trialkylsilylated carboxylates represented by the above-described formula **(I)**.

Although the invention will be explained using a two-step reaction, it is clear from the previous description that the invention also relates to each step separately.

In general, the process comprises two steps. These steps can be performed in a one-pot reaction or separate.

A preferred embodiment of this method will be elucidated in detail.

In a first step, a hexaalkyldisiloxane represented by the above-described formula (II) is treated with fuming sulfuric acid. Fuming sulfuric acid is a solution of sulfur trioxide in sulfuric acid; in a preferred embodiment, there is used a solution containing 10 to 70wt% free sulfur trioxide, and in the most preferred embodiment, fuming sulfuric acid H₂SO₄ containing about 20% free SO₃. At the end of this reaction two layers may be obtained, an upper and a bottom layer. After isolation for example via decantation, the upper layer furnishes the hexaalkyldisilylsulfate formed during the reaction. An alternative process e.g. when there is insufficient phase separation could be treating with a drying agent such as ammonium sulfate.

Hexaalkyldisilylsulfates can also be obtained from the reaction of trialkylsilanes with SO₃, as described in M.Weidenbruch et al. (J.Organometallic Chemistry 141 (1977) 9-21).

In a second step, the hexaalkyldisilylsulfate obtained in step one is reacted with an unsaturated carboxylic compound represented by the above-described formula (III). The reaction is preferably set up such as each one mole of hexaalkyldisilylsulfate is treated with at least two moles of unsaturated carboxylic compound.

Examples of unsaturated carboxylic compounds which can be used in the process according to the invention include derivatives of acrylic acid, methacrylic acid, maleic acid, fumaric acid and more particularly, acrylic acid, methacrylic acid, maleic acid, fumaric acid, methyl maleic acid, amyl maleic acid, n-butyl maleic acid, methyl fumaric acid, amyl fumaric acid, n-butyl fumaric acid. In a more preferred embodiment said unsaturated carboxylic compound is a methacrylic compound.

Said unsaturated carboxylic compounds are preferably chosen amongst metal salts. In a more preferred embodiment sodium or potassium salts of said compounds are used.
At the end of the reaction, the reaction mix is optionally treated with an organic solvent and the precipitate formed is filtered out. The organic solvent is then easily evaporated under reduced pressure and the unsaturated trialkylsilyl carboxylate is isolated, eventually distilled under reduced pressure.

In another embodiment the two steps of the process are performed under inert atmosphere and more preferably under nitrogen atmosphere.

Examples of the trialkylsilylated carboxylate monomers prepared by the process of the invention using methacrylic acid in step two, include trimethylsilyl methacrylate,triethylsilyl methacrylate, tri-n-propylsilylmethacrylate, triisopropylsilyl methacrylate, tri-n-butylsilyl methacrylate, triisobutylsilyl methacrylate, tri-s-butylsilyl methacrylate, tri-n-amylsilyl methacrylate, tri-n-hexylsilyl methacrylate, tri-n-octylsilyl methacrylate, tri-n-dodecylsilyl methacrylate, triphenylsilyl methacrylate, tri-p-methylphenylsilyl methacrylate, tribenzylsilyl methacrylate and tri t-butylsilyl methacrylate.

Other examples include ethyldimethylsilyl methacrylate, n-butyldimethylsilyl methacrylate, t-butyl dimethylsilyl methacrylate diisopropyl-n-butylsilyl methacrylate, n-octyldi-n-butylsilyl methacrylate, diisopropylstearylsilyl methacrylate, dicyclohexylphenylsilyl methacrylate, t-butyldiphenylsilyl methacrylate, phenyldimethylsilyl methacrylate and lauryldiphenylsilyl methacrylate.

Examples of trialkylsilylated carboxylate monomers of general formula **(I)** wherein R⁵ is the ester of the above-described formula **(II)** include triisopropylsilyl methyl maleate, triisopropylsilyl amyl maleate, tri-n-butylsilyl n-butyl maleate, t-butyldiphenylsilyl methyl maleate, t-butyldiphenylsilyl n-butyl maleate, triisopropylsilyl methyl fumarate, triisopropylsilyl amyl fumarate, tri-n-butylsilyl n-butyl fumarate, t-butyldiphenylsilyl methyl fumarate, and t-butyldiphenylsilyl n-butyl fumarate.

In the existing methods for the preparation of carboxylic acid silyl esters by acid catalysed silylation, continuous removal of water is necessary for shifting the equilibrium towards the product. Furthermore, bulkier silyl groups fail to react in such conditions (see Examples 1 and 2), this probably due to enhanced steric strain associated with low reactivity of some unsaturated carboxylic acid derivatives.

In the process of the present invention fuming sulfuric acid is used in step one. This particular feature provides with the advantages that there is no need to set up a system for continuous removal of water. The yield is increased and the product purification is simplified. Furthermore, another advantage is that reactions may be performed at room temperature. Due to these mild conditions there is no need to use polymerisation inhibitors and no degradation of the material occurs.

Due to its shortness, its easy work-up procedure and its high yield the process of the present invention can be considered as a substantial improvement over the existing methods described above.

The feasibility of the process of the invention has been proven with the synthesis of tributylsilyl methacrylate **(5)** (Scheme) in two reaction steps in a very good yield of 73.3%.

### General scheme:

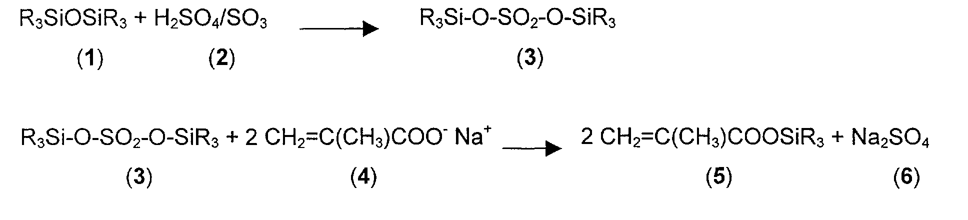

In a first step hexabutyldisiloxane **(1)** is treated with fuming sulfuric acid **(2)** under a nitrogen atmosphere to give hexabutyldisilylsulfate **(3)**. In a second step **(3)** is reacted with at least two equivalent of sodium methacrylate **(4)** to give tributylsilylmethacrylate **(5)**.

Figure 1 refers to the first step from compound **(1)** to compound **(3).** Four experiments were performed through which the amount of fuming H₂SO₄ was increased (5.37 g to 21.5 g for 50 g of hexabutyldisiloxane). The products were analyzed by quantitative ¹³C and ²⁹Si FT NMR. Subsequent analytical data were obtained by FT IR.

Figure 1 shows the decrease of **(1)** and the formation of (3) (=P1) and a minor amount of a second product (=P2). It is believed that this latter product could be apyrosulfate (Bu₃Si-O-SO₂-O-SO₂-O-SiBu₃).

The trialkylsilylated carboxylate monomers obtained by the process of the invention are useful in coating or paint composition. More preferably they are used in antifouling coating or paint compositions.

They can be polymerised with various other monomers such as vinyl monomers including acrylic esters, methacrylic esters, styrene, vinyl esters (e.g., vinyl acetate, vinyl propionate, vinyl butyrate, vinyl benzoate), vinyltoluene, alpha-methylstyrene, crotonic esters, and itaconic esters.

The polymers and copolymers of said monomers when used in a antifouling coating composition give a film which undergoes neither cracking nor peeling and shows moderate hydrolysability to dissolve into seawater constantly at an adequate rate and which therefore exhibits excellent antifouling property for long term.

The antifouling coating compositions prepared using the monomers obtained by the process of the invention are tin-free coatings and provide an alternative to the present self-polishing coating (spc) technology based on hydrolysable tributyltin polymers (use of which is due to be banned in antifouling paints by 2003). The trialkylsilylated carboxylate monomers provided by the process of the invention compared to organotin compounds are less toxic, less polar, more hydrophobic and more stable.

### Examples

Hereunder four examples are given, the first two are comparative examples and the others are examples according to the invention. However it should be construed that the invention is in no way limited to those examples.

### Example 1: First comparative example

Comparative example vis-à-vis the invention, according to the teaching of Chem. Lett. 1980, 1475-1478. The same procedure as described in that reference was applied using methacrylic acid, hexabutyldisiloxane and concentrated sulfuric acid as catalyst. In a flask equipped with a Dean-Stark extractor, are placed methacrylic acid 4.47 g, hexabutyldisiloxane 50 g, concentrated sulfuric acid as catalyst 0.5 g and toluene. After 7h of reflux in toluene using a Dean-Stark extractor, no trace of tributylsilylmethacrylate could however be detected.

### Example 2: Second comparative example

The same procedure as described in Example 1 was performed using fuming sulfuric acid as catalyst. In a flask equipped with a Dean-Stark extractor, are placed methacrylic acid 4.47 g, hexabutyldisiloxane 50 g, fuming sulfuric acid as catalyst 0.9 g and toluene. The flask was heated to reflux. After 7h of reflux, no trace of tributylsilylmethacrylate could be detected.

### Example 3: (Example according to the invention)

50 g of hexabutyldisiloxane **(1)** are added dropwise to 21.5 g of stirred fuming sulfuric acid **(2)** under a nitrogen atmosphere at 0°C, the reaction mixture is maintained at that temperature until the end of the addition. At that time the mixture is allowed to reach room temperature and stirred for an additional 18 h. After decantation, the upper layer is separated to furnish hexabutyldisilylsulfate **(3)**.

1.9 g (2.1 equivalents) of sodium methacrylate **(4)** are added at 0°C at room temperature, to 4 g of stirred hexabutyldisilylsulfate (3) under an atmosphere of nitrogen. After 18 h at room temperature, dichloromethane is added and the sodium sulfate precipitate **(6)** is filtered out of the solution, the solvent is then evaporated to give tributylsilylmethacrylate **(5)** in a 73.3 % yield. The starting materials were found in the following amounts hexabutyldisiloxane 3.2%, hexabutyldisilylsulfate 4.9 %, and methacrylic acid 18.6%.

### Example 4: (Example according to the invention)

10 g of hexamethyldisiloxane are added dropwise to 10.8 g of stirred fuming sulfuric acid **(2)** under a nitrogen atmosphere at 0°C, the reaction mixture is maintained at that temperature until the end of the addition. At that time the mixture is allowed to reach room temperature and stirred for an additional 4 h. After that time, water is eliminated by addition of toluene and evaporation under vacuum to furnish hexamethyldisilylsulfate.

1.9 g (2.2 equivalents) of sodium methacrylate (4) are added, at room temperature, to 2 g of stirred hexamethyldisilylsulfate under an atmosphere of nitrogen. After 18 h at that temperature, dichloromethane is added and the sodium sulfate precipitate **(6)** is filtered out of the solution, the solvent is then evaporated to give trimethylsilylmethacrylate.

While the invention has been described in detail and with reference to specific embodiments thereof, it will be apparent to one skilled in the art that various changes and modifications can be made therein without departing from the spirit and scope thereof.

## Claims

1. Process for the preparation of trialkylsilylated carboxylate monomers of general formula **(I)** 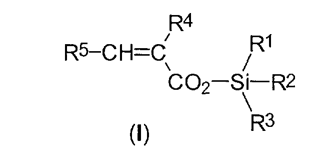 wherein R¹, R², R³ represents each independently an alkyl or an aryl group, R⁴ represents a hydrogen atom or a methyl group and R⁵ represents a hydrogen, alkyl, -COR⁶ or - COOR⁶; wherein R⁶ represents an alkyl group, which process comprises the step of reacting a hexaalkyldisilylsulfate of the formula **(IV)** 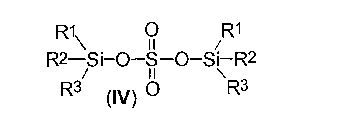 with an unsaturated carboxylic compound of formula **(III)** 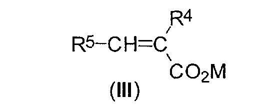 wherein M is a metallic cation and R¹, R², R³, R⁴, R⁵ have the same meaning as that defined above respectively.

2. A process for the preparation of a hexaalkyldisilylsulfate of the formula **(IV)** 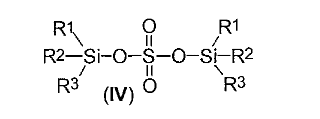 by treating a hexaalkyldisiloxane of formula **(II)** 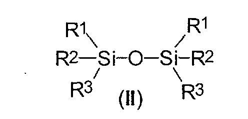 with fuming sulfuric acid, wherein R¹, R², R³ represents each independently an alkyl or an aryl group.

3. A process for the preparation of trialkylsilylated carboxylate monomers of general formula **(I)** 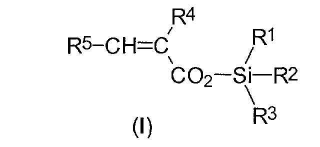 comprising a first step by treating a hexaalkyldisiloxane of formula **(II)** 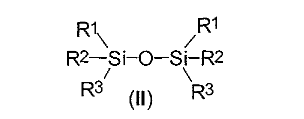 with fuming sulfuric acid, according to claim 2, and
a second step by reacting a hexaalkyldisilylsulfate of the formula **(IV)** 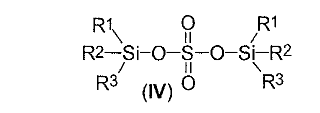 with an unsaturated carboxylic compound of formula **(III)**, 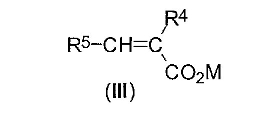 according to claim 1, wherein M, R¹, R², R³, R⁴, R⁵ and R⁶ have the same meaning as that defined above respectively.

4. A process according to claims 1 to 3, wherein R¹, R², R³ and R⁶ each independently is a linear, branched or cyclic alkyl group, saturated or unsaturated, containing from 1 to 12 carbon atoms, preferably from 1 to 6 carbon atoms, more preferably from 1 to 4 carbon atoms.

5. A process according to claim 4, wherein R¹, R², R³ each independently are chosen from the group comprising methyl, ethyl, propyl, isopropyl, butyl, t-butyl and phenyl.

6. A process according to claims 5, wherein R¹, R², R³ are butyl or isopropyl.

7. A process according to claims 1 or 3 to 6, wherein the unsaturated carboxylic compound of formula **(III)** chosen from the group comprising the metals salts and preferably is the sodium or the potassium salt.

8. A process according to claims 1 or 3 to 7, wherein the unsaturated carboxylic compound of formula **(III)**, is chosen from the group comprising the salts of acrylic acid, methacrylic acid, maleic acid and fumaric acid.

9. A process according to claim 7 and 8, wherein the unsaturated carboxylic compound of formula **(III)**, is preferably a methacrylic compound, more preferably sodium methacrylate.

10. A process according to claims 1 to 11, wherein the reaction steps are performed under inert atmosphere and preferably under nitrogen atmosphere.

11. A process according to claims 1 or 3 to 10, wherein the reaction product comprising the of trialkylsilylated carboxylate monomers of general formula **(I)** is further treated with an organic solvent and then filtered.

12. A process according to claim 11, wherein the organic solvent is a halogenated solvent, more preferably a chlorinated solvent and yet more preferably dichloromethane.

13. A process according to claims 11 or 12, wherein the formed trialkylsilylated carboxylate monomers of general formula **(I)** are obtained after evaporating the organic solvent.

14. A process according to claim 2, wherein the relative amount of fuming H₂SO₄ is present in more than 0.5 eq., more preferably at about 1 equivalent.

15. Hexaalkyldisilylsulfate obtained by performing the process of claim 2.

16. Trialkylsilylated carboxylate monomers obtained by the process of any of claims 1 or 3 to 13.

17. Triisopropylsilyl methacrylate obtained by the process of any of claims 1 or 3 to 13.

18. Tributylsilyl methacrylate obtained by the process of any of claims 1 or 3 to 13.

19. Use of a compound obtained by the process of any of claims 1 to 13 in the preparation of a hydrolysable polymer.

20. Use according to claim 19 in antifouling coating compositions.
